# EUROPÄISCHE PATENTSCHRIFT

(11) **EP 3 722 643 B1**
(45) Veröffentlichungstag und Bekanntmachung des Hinweises auf die Patenterteilung: **29.11.2023**
(21) Anmeldenummer: 20165420.9
(22) Anmeldetag: 24.03.2020
(51) Int. Cl.: F16K 29/00, F16K 31/06, F16K 11/00, G05D 23/13, F16K 31/10, F16K 11/07

(54) **MISCHVENTIL**
MIXING VALVE
VANNE MÉLANGEUSE

(30) Priorität: 12.04.2019 DE 102019109835; 14.08.2019 DE 102019121944
(43) Veröffentlichungstag der Anmeldung: 14.10.2020
(73) Patentinhaber: SVM Schultz Verwaltungs-GmbH & Co. KG, 87700 Memmingen (DE)
(72) Erfinder: Hasel, Claus Peter, 87700 Memmingen (DE); Jöchle, Verena, 87474 Buchenberg (DE)
(74) Vertreter: Patentanwälte Olbricht, Buchhold, Keulertz Partnerschaft mbB

(56) Entgegenhaltungen:
- EP-A1- 1 910 724
- DE-A1- 2 441 714
- DE-A1- 19 747 307
- DE-A1-102004 020 268
- DE-A1-102005 056 029
- DE-A1-102016 224 323
- DE-T2- 69 804 426
- US-A- 5 918 630
- US-A1- 2018 284 818
- US-B1- 9 206 921
- US-B2- 8 397 759

## Beschreibung

Die Erfindung betrifft ein Mischventil.

Der hierzu bekannte Stand der Technik ist konstruktiv sehr aufwändig und neigt zudem bei inneren Verunreinigungen durch Schmutz zu Fehlfunktionen oder Totalausfall. Gerade tropfende Wasserhähne aufgrund einer verunreinigungsbedingten Fehlfunktion des Mischventils oder nicht mehr schließbare Wasserhähne aufgrund eines Totalausfalls des Mischventils können regelmäßig zu einem Nutzerunmut führen. Ein Wasserhahn ist dann nicht mehr schließbar, wenn der Fluidstrom nicht mehr wie gewohnt unterbrochen werden kann. Dies ist nicht nur auf Wasser führende Vorrichtungen beschränkt, sondern betrifft eine Vielzahl fluidführender Vorrichtungen.

Aus der DE 24 41 714 A1 ist ein Ventil bekannt, welches ein Ventilgehäuse, ein Schaltventilteil und ein Proportionalventilteil umfasst. Für das Schaltventilteil und das Proportionalventilteil ist ein mehrteiliger Ventilkörper vorgesehen, wobei dieser ein Ventilkörperteil umfasst, welches dem Schaltventilteil zugewandt ist, und ein Ventilkörperteil umfasst, welches dem Proportionalventilteil zugewandt ist. Der Ventilkörper ist des Weiteren von einer externen Kraft gegen die Rückstellkraft zumindest einer Feder bewegbar.

Auch aus der DE 10 2016 224323 A1, der DE 698 04 426 T2 und der US 2018/284818 A1 sind jeweils Ventile bekannt, die sich zum Mischen eignen.

Eine innere Verunreinigung kann beispielsweise dadurch erfolgen, dass der durch das Mischventil geführte Fluidstrom Verunreinigungen mitführt und in das Mischventil einträgt. Eine Verunreinigung kann beispielsweise schon ein Haar oder ein Sandkorn sein. Die Verunreinigung kann sich im Inneren des Mischventils festsetzen und/oder bewegliche Elemente verklemmen und/oder Dichtflächen freisperren, was dann dazu führen kann, dass sich das Mischventil nicht mehr wie gewünscht schließen und der Fluidstrom nicht mehr unterbrochen werden kann. Beim Verringern des Fluidstroms kann der Hahn dann tropfen (Fehlfunktion) und beim Verhindern der Verringerung des Fluidstroms kann das Fluid weiter unverringert aus dem Hahn strömen (Totalausfall).

Die Erfindung hat es sich daher zur Aufgabe gemacht, diesen Stand der Technik insbesondere hinsichtlich der eingangs genannten Probleme zu verbessern.

Gelöst wird diese Aufgabe mit einem Mischventil nach den Merkmalen des Patentanspruches 1.

Hierbei wird ein Mischventil vorgeschlagen, umfassend ein Ventilgehäuse und ein Schaltventilteil und ein Proportionalventilteil, wobei für das Schaltventilteil und das Proportionalventilteil ein mehrteiliger Ventilkörper vorgesehen ist, und der Ventilkörper ein dem Schaltventilteil zugewandtes Ventilkörperteil und ein dem Proportionalventilteil zugewandtes Ventilkörperteil aufweist, und der Ventilkörper von einer externen Kraft gegen die Rückstellkraft zumindest einer Feder bewegbar ist.

Besonders vorteilhaft ist dabei, dass der Ventilkörper gleichzeitig je ein dem Schaltventilteil und ein dem Proportionalventilteil zugewandten Ventilkörperteil aufweist. Die externe Kraft kann von einem elektromagnetisch betätigbaren Stößel aufgebracht werden.

Die Steuerung des Mischventils ist dabei so geschickt, dass in einer ersten Stellung zumindest das Schaltventil geöffnet ist, aber noch keine Regelfunktion des Proportionalventilteils stattfindet, die erst bei einer zweiten Phase erfolgt. Mit anderen Worten kann also das erfindungsgemäße Mischventil mit seinem Ventilkörper eine zumindest zweiphasige Bedienung zulassen. Es ist daher möglich einen ersten Fluidstrom in einer ersten Phase freizugeben, während, vorzugsweise ohne Vermischung, ein zweiter Fluidstrom noch verschlossen ist. Dieser kann dann in der zweiten Phase hinzu geschaltet werden. Zudem ist ein zweiter Fluidstrom aus der zweiten Phase verschließbar, während ein erster Fluidstrom in einer ersten Phase noch fließen kann.

Das Mischventil kann so steuerbar sein, dass es aus einer Schließstellung, in der ein Sitzventil oder Schaltventil verschlossen werden kann, durch die externe Kraft in eine Stellung der ersten Phase, darauf durch weitere externe Kraft in eine Stellung der zweiten Phase, darauf durch Nachlassen der externen Kraft für die zweite Phase zurück in eine Stellung der ersten Phase und dann durch weiteres Nachlassen oder Stoppen der externen Kraft erneut in die Schließstellung verstellbar ist. Diese Ausführung reduziert erheblich eine Konstruktionskomplexität und verringert die Gefahr eines möglichen Schmutzeintrags dadurch, dass ein zweiter Fluidstrom in einer zweiten Phase gar nicht geöffnet werden muss, um einen Fluidstrom zu ermöglichen - es reicht ein Fluidstrom aus einer ersten Phase aus.

Auch die mehrteilige Ausführung des Ventilkörpers dient dem Verhindern von Fehlfunktionen und Totalausfall durch Schmutzeintrag. Dadurch, dass der Ventilkörper zweiteilig ausgebildet ist, kann selbst im Falle, dass beispielsweis das dem Proportionalventilteil zugewandte Ventilkörperteil durch Schmutz verklemmt oder in seiner Schließfunktion beeinträchtigt ist, das dem Schaltventilteil zugewandte Ventilkörperteil einen Fluidstrom beenden. Es liegt hier also eine doppelte Sicherheit vor.

Gemäß einer bevorzugten Ausführungsform des Mischventils nach der Erfindung ist das Schaltventilteil ein Sitzventil. Gerade ein solches Sitzventil eignet sich in besonders vorteilhafter Weise, da hier eine hohe Schließgeschwindigkeit und eine geringe Störanfälligkeit realisierbar ist.

Es ist gemäß einer weiteren bevorzugten Ausführungsform nach der Erfindung denkbar, dass das Proportionalventilteil ein Sitzschieberventil ist.

Gemäß einer weiteren Ausgestaltung des erfindungsgemäßen Mischventils ist eine der Federn als Schließfeder ausgebildet und eine der Federn als Regelfeder ausgebildet, wobei die Schließfeder eine geringere Steifigkeit aufweist als die Regelfeder. Durch eine verstellende externe Kraft kann somit der dem Schaltventilteil zugewandten Ventilkörperteil verstellt werden, um eine erste Phase zu erreichen. Zeitversetzt, die Schließfeder kann noch immer komprimiert werden, kann auch das dem Proportionalventilteil zugewandten Ventilkörperteil verstellt werden, um eine zweite Phase zu erreichen. So ist in konstruktiv einfacher Weise eine Mehrteiligkeit des Ventilkörpers genutzt, um eine Mehrphasigkeit des Betriebs zu realisieren. Die Schließfeder kann dem Proportionalventilteil und die Regelfeder kann dem Schaltventilteil zugeordnet sein. Der Zeitversatz ist nicht zwingend. Die Federn können auch derart ausgestaltet sein, dass deren Komprimierungen zietlich hintereinander erfolgen.

Eine speziellere Ausführung dazu sieht vor, dass die Federn derart ausgebildet sind, dass eine entgegen der Federkräfte der Federn wirkende Kraft zunächst ausschließlich die Schließfeder komprimiert und erst zeitlich nachfolgend oder teilweise zeitgleich die Regelfeder komprimiert. Die verstellende externe Kraft kann also zunächst ausschließlich die Schließfeder komprimieren, während die Regelfeder unkomprimiert bleibt. Die erste Phase kann durchlaufen werden bis die Schließfeder komprimiert ist. Im Anschluss daran kann eine größere externe Kraft aufgebracht werden, um die steifere Regelfeder zu komprimieren. Dies geschieht in der zweiten Phase. Mit dieser Ausführung sind die Phasen zeitlich und funktional voneinander abgrenzbar, können jedoch auch zeitlich versetzt zueinander verlaufen.

Es ist gemäß einer weiteren Ausgestaltung des erfindungsgemäßen Mischventils denkbar, dass das eine Ventilkörperteil eine Führungsausnehmung für das andere Ventilkörperteil zur Führung in Richtung einer Längsachse aufweist. Dadurch kann eine sichere Führung des einen Ventilkörperteils mittels des anderen Ventilkörperteils realisiert werden.

Alternativ oder zusätzlich kann das erfindungsgemäße Mischventil ein vorzugsweise monolithisches Anlagestück aufweisen, welches eine Führungsfläche für das eine Ventilkörperteil und/oder eine Anschlagsfläche für das andere Ventilkörperteil aufweist. Die Führungsfläche kann sich dadurch auszeichnen, dass das Ventilkörperteil parallel dazu daran entlanggleitet, die Anschlagsfläche kann sich dadurch auszecihnen, dass das Ventilkörperteil ortogonal daran anstößt. Durch die Funktionsintergration kann eine Teileruduktion herbeigeführt werden. Das Anlagestück kann Teil des Ventilgehäuses sein.

Es ist zusätzlich oder alternativ gemäß einer weiteren Ausgestaltung des erfindungsgemäßen Mischventils denkbar, dass ein vorzugsweise monolithisches Anlagestück zumindest abschnittsweise einen Ringspalt definiert. Dieses Anlagestück kann, muss aber nicht, das Anlagestück sein, welches die Führungs- und Anschlagsfläche umfasst. Falls ein solches jedoch vorgesehen ist, kann es eine Dreifachfunktion ausfüllen (Führungs- und Anschlagsfläche sowie Ringspaltausbildung), was zu einer weiteren Teileruduktion führt. Der Ringspalt kann beispielsweise mit dem ggf. als Sitzventil ausgebildeten Schaltventil in fluidischer Verbindung stehen, vorzugsweise unmittelbar dort einmünden. Das Anlagestück kann Teil des Ventilgehäuses sein.

Es ist gemäß einer weiteren Ausführungsform des Mischventils nach der Erfindung denkbar, dass zwischen dem dem Schaltventilteil zugewandten Ventilkörperteil und dem Ventilgehäuse eine der Federn als Schließfeder angeordnet ist und eine weitere der Federn als Regelfeder zwischen dem dem Proportionalventilteil zugewandten Ventilkörperteil und dem Ventilgehäuse angeordnet ist. Bei dieser Ausführung muss also zwischen beiden Ventilkörperteilen keine Feder angeordnet sein - der Zwischenraum ist federlos ausgebildet. Vorteilhaft daran ist, dass die Lage der Schließfeder unabhängig von der Lage des dem Proportionalventilteil zugewandten Ventilkörperteils ausgebildet ist, da die Schließfeder einseitig eine feste Abstützung an dem Ventilgehäuse oder diesem zugeordneten Elementen aufweist. Der Zwischenraum beider Ventilkörperteile ist somit frei von Elementen, die den freien Fluidstrom bremsen oder wenig durchströmte Bereich ausbilden. Gerade wenig oder schlecht durchströmte Bereiche neigen zur Schmutzablagerung oder Rückstandsbildung.

Gemäß einer weiteren bevorzugten Ausführungsform des erfindungsgemäßen Mischventils weist das Ventilkörperteil eine Abstützfläche für die Schließfeder auf, welche Abstützfläche dem anderen Ventilkörperteil gegenüber liegt. Das andere Ventilkörperteil kann das dem Proportionalventilteil zugewandte Ventilkörperteil sein. Dadurch kann das Ventilkörperteil beispielsweise mit einer als Druckfeder ausgestalteten Schließfeder in einer Schließstellung vorgespannt sein/werden.

Bei einer weiteren erfindungsgemäßen Ausführungsform des Mischventils nach der Erfindung weist das Anlagestück eine Abstützfläche für die Schließfeder auf, welche Abstützfläche vorzugsweise zu dem anderen Ventilkörperteil abgewandt liegt. Das andere Ventilkörperteil kann das dem Proportionalventilteil zugewandte Ventilkörperteil sein. In diesem Fall kann das Anlagestück zusätzlich zu den bereits oben genannten Funktionen auch eine Abstützfunktion für die Schließfeder aufweisen und somit eine Vierfachfunktion erfüllen. Das Anlagestück kann Teil des Ventilgehäuses sein.

Denkbar ist gemäß einer weiteren bevorzugten Ausführungsform des Mischventils nach der Erfindung, dass die Schließfeder im Ringspalt angeordnet ist. Die Schließfeder umgibt also das Ventilkörperteil und ist zur Bauraumeinsparung in einem ohnehin gegebenenfalls vorhandenen Raum, nämlich dem Ringspalt, angeordnet.

Bei einer weiteren Ausführungsform des erfindungsgemäßen Mischventils weist das Ventilkörperteil umfangsseitig entlang seiner Längsmittelachse zumindest einen Fluidkanal auf. Das Ventilkörperteil ist also zumindest abschnittsweise umströmbar, was eine stabilisierende Wirkung auf das Ventilkörperteil haben kann. Der zumindest eine Fluidkanal, denkbar sind auch mehrere Kanäle, beispielsweise sechs Fluidkanäle, stellt somit einen Abschnitt der Fluidleitung zwischen einer Zuleitung und einer Ableitung dar. Bei einer weiteren Ausgestaltung des erfindungsgemäßen Mischventils ist zwischen dem dem Schaltventilteil zugewandten Ventilkörperteil und dem dem Proportionalventilteil zugewandten Ventilkörperteil eine der Federn als Schließfeder angeordnet und eine weitere der Federn als Regelfeder zwischen dem dem Proportionalventilteil zugewandten Ventilkörperteil und dem Ventilgehäuse angeordnet. Dadurch können die Ventilkörperteile in einfacher Weise unabhängig voneinander bewegt und so eine hohe Funktionalität erreicht werden.

Erfindungsgemäß weist das dem Schaltventilteil zugewandte Ventilkörperteil an seinem einen Ende zumindest einen Reinigungsfortsatz auf, welcher derart ausgebildet und/oder angeordnet ist, dass dieser mit einer ihm gegenüberliegenden Fläche des dem Proportionalventilteil zugewandten Ventilkörperteils in Kontakt kommen kann. Wird das Mischventil beispielsweise von handelsüblichem Leitungswasser als Fluid durchströmt, können typische Rückstände im Mischventil enstehen, wie beispielsweise Kalkablagerungen. Diese Rückstände innerhalb des Mischventils sind derzeit nicht oder nur sehr aufwändig entfernbar und führen zunächst zu Duchströmungsengpässen und schlussendlich zum Verstopfen oder Totalausfall des Mischventils - das Ventil ist dann gar nicht mehr zu öffnen. Der Reinigungsfortsatz erfüllt eine immerwährende Reinigungsfunktion. Bei jedem Kontakt zwischen dem Reinigungsfortsatz und der ihm gegenüberliegenden Fläche kann der Reinigungsfortsatz durch Anstoßen, also bezogen auf die zu reinigende Fläche weitgehend senkrechte Krafteinwirkung, die Rückstände auf der kontaktierten Fläche aufbrechen. Die Rückstandbruchstücke werden dann vom Fluidstrom aus dem Mischventil getragen. Der Reinigungsfortsatz kann zudem zu einer veränderten Strömungsgeschwindigkeit in seinem Bereich führen und Verwirbelungen erzeugen, was ebenfalls eine Reinigungswirkung haben kann. Der Reinigungsfortsatz zeichnet sich dadurch aus, dass er gegenüber einem Grundkörper des Ventilkörperteils verlängert ausgebildet ist und sich fortsatzartig vom Grundkörper weg erstreckt. Vorteilhaft für eine Reinigungswirkung kann zudem sein, dass in Umfangsrichtung des Ventilkörperteils beidseits des Reinigungsfortsatzes ein Freiraum ausgebildet ist. Dies führt dazu, dass Schmutz nicht gleichmäßig belastet wird sondern belastete sowie gleichzeitig unbelastete Abschnitte erfährt. Bei mehreren Reinigungsfortsätzen können diese gleichmäßig beabstandet ausgebildet sein. Diese Ausführung eignet sich insbesondere bei einem mehrteiligen Ventilkörper, um Rückstände zwischen den Ventilkörperteilen zu entfernen oder gar nicht erst entstehen zu lassen. Das führt zu einer langlebigen Öffnungsfunktionalität des Mischventils. Mehrere Reinigungsfortsätze könne zudem geometrisch unterschiedlich ausgestaltet sein. Insbesondere eine Reinigungsfläche jedes Reinigungsfortsatzes, welche zur Kontaktierung mit der zu reinigenden Fläche ausgebildet ist, kann unterschiedliche Abmessungen, Kantenverläufe, Kantentypen, Schrägen und/oder Abwinkelungen bezüglich anderer Reinigungsflächen des selben Ventilkörperteils aufweisen.

Gemäß einer weiteren Ausführungsform des erfindungsgemäßen Mischventils umfasst das dem Schaltventilteil zugewandte Ventilkörperteil zumindest ein Rotationsmittel, welches ausgebildet ist, um im Zusammenwirken mit einem vorbeiströmbaren Fluid eine Rotation des Ventilkörperteils um seine eigene Längsachse verursachen zu können. Mit anderen Worten führt erst die Bewegungsenergie eines vorbeiströmenden Fluids dazu, dass das Ventilkörperteil rotiert. Diese Rotationsbewegung führt insbesondere zu verbesserten Reinigungseigenschaften, da bei Kontaktierung einer zu reinigenden Fläche dadurch zu der senkrechten Krafteinwirkung auch eine bezogen auf die zu reinigende Fläche parallele Kraftkomponente kommt. Die Rückstände werden also auch abgeschliffen und/oder abgeschert.

Es ist gemäß einer weiteren Ausführungsform denkbar, dass das Rotationsmittel eine Anströmfläche ist, welche mit einer Strömungsrichtung des Fluids einen spitzen Winkel (α) im Bereich zwischen 0,1° bis 45°, vorzugsweise zwischen 10° bis 20 °, noch mehr bevorzugt 15° einschließt. Als Referenz kann alternativ zur Strömungsrichtung auch die Längsachse dienen, um den spitzen Winkel zu definiern. Bei Vorliegen eines Reinigungsfortsatzes ist insbesondere der Freiraum benachbart des Reinigungsfortsatzes vorteilhaft, da sich am Reinigungsfortsatz eine Reinigungskante ausbilden kann, welche eine vorteilhafte Aufbrechfunktion erfüllt. Die Rotation des Ventilkörperteils drückt die Reinigungskante in die Rückstände hinein oder scharbt die Reinigungskante an den Rückständen entlang, um diese aufzubrechen.

Des Weiteren umfasst die Erfindung auch die Verwendung des erfindungsgemäß vorgeschlagenen Mischventils zum Mischen von Wässern unterschiedlicher Temperaturen, zum Beispiel in Bordküchen oder Toiletten von Luftfahrzeugen, wie Flugzeugen.

In der Zeichnung ist die Erfindung schematisch dargestellt. Es zeigen:
Fig. 1a, 2a, 3a in einem Schnitt ein nicht erfindungsgemäßes Mischventil in verschiedenen Stellungen in Figur 3a zusätzlich mit einer regelungs-technischen Schaltung,
Fig. 1b, 2b, 3b in einem vergrößerten Detail der Fig. 1a, 2a, 3a die Anordnung des Ventilkörpers auf den Federn,
Fig. 1c, 2c in einem vergrößerten Detail der Fig. 1a, 2a die Lagerung des Ventilkörpers auf einem Sitzventil,
Fig. 4a in einem Schnitt ein nicht erfindungsgemäßes Mischventil,
Fig. 4b in einem vergrößerten Detail der Fig. 4a die Lagerung des Ventilkörpers auf einem Sitzventil,
Fig. 5a in einem Schnitt das erfindungsgemäße Mischventil gemäß einer Ausführungsform,
Fig. 5b in einem vergrößerten Detail der Fig. 5a die Lagerung des Ventilkörpers auf einem Sitzventil,
Fig. 6a eine perspektivische Ansicht eines Ventilkörperteils, und
Fig. 6b eine weitere perspektivische Ansicht des Ventilkörperteils nach Figur 6a.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen und, sofern nicht explizit ausgeschlossen, mit allen anderen offenbarten Merkmalen und Ausführungsformen kombinierbar sein.

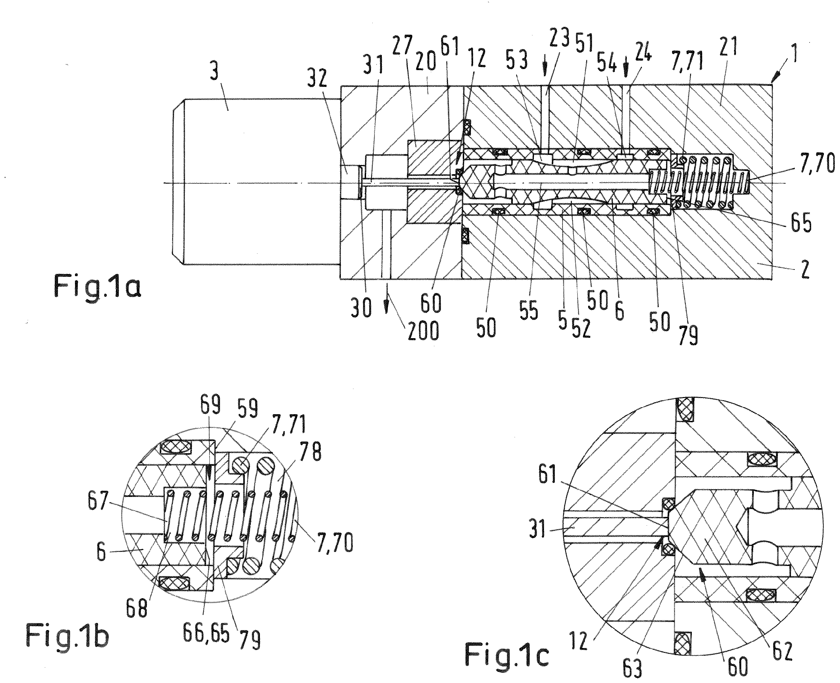

Eine nicht erfindungsgemäße Ausführungsform der Offenbarung ist in den Figuren 1a bis 3b gezeigt und nachfolgend beschrieben.

Der Aufbau des erfindungsgemäßen Mischventils 100, 1000 wird insbesondere mithilfe von Figur 1a beschrieben. In der Bildersequenz von Figur 1a, 2a und 3a werden unterschiedliche Stellungen des Mischventils gezeigt, die das Mischventil 1 nach Figur 1a einnehmen kann.

Das in Figur 1a gezeigte Mischventil 1 besteht aus einem Ventilgehäuse 2 und einem Elektromagneten 3.

Der Aufbau des Elektromagneten 3 ist nicht weiter gezeigt und ist, wie für den Fachmann bekannt, herkömmlich ausgebildet. Eine von elektrischem Strom durchflossene Spule erzeugt ein Magnetfeld, welches einen in einem Ankerraum gelagerten Anker bewegt, vorzugsweise mit einer Ankerstange 32, dessen vorderes Ende 30 auf einen Stößel 31 wirkt. Dabei bewegt sich die Ankerstange 32 bzw. der Stößel 31 gegen die Kraft einer Feder 7, zum Beispiel einer Regelfeder 71 und/oder einer Schließfeder 70.

Das hier gezeigte Mischventil 1 besitzt ein Ventilgehäuse 2. Das Ventilgehäuse 2 kann einstückig oder auch mehrteilig sein, was die Montage der einzelnen Elemente innerhalb des Ventilgehäuses 2 erleichtert. Das Mischventil 1 besitzt ein als Sitzventilteil ausgebildetes Schaltventilteil 10 und ein Proportionalventilteil 11. Vorzugsweise besitzt daher auch das Ventilgehäuse 2 ein erstes Gehäuseteil 20, welches überwiegend das Schaltventilteil 10 und ein zweites Gehäuseteil 21, welches überwiegend das Proportionalventilteil 11 des Mischventils 1 aufnimmt.

Das Ventilgehäuse 2, hier das zweite Gehäuseteil 21, besitzt zwei Zuleitungen, eine erste Zuleitung 23 für zum Beispiel kaltes Wasser und eine zweite Zuleitung 24 für zum Beispiel warmes Wasser. Es sei an dieser Stelle erwähnt, dass das erfindungsgemäße Mischventil natürlich dafür geeignet ist, fließfähige Medien (Flüssigkeiten oder Gase) in beliebiger Weise miteinander zu mischen, es kommt hierbei also nicht auf die hier beschriebene Flüssigkeit, zum Beispiel Wasser, in verschiedenen Temperaturstufen, an. Die Erfindung ist hier sehr variabel und flexibel auch auf andere Fluide anwendbar.

In dem Ventilgehäuse 2 befindet sich eine Steuerhülse 5. Diese Steuerhülse 5 ist über mehrere O-Ringdichtungen 50 gegenüber dem Ventilgehäuse 2 abgedichtet. Die Steuerhülse 5 besitzt eine erste radial angeordnete Öffnung 53, die mit der ersten Zuleitung 23 in fluidischer Verbindung steht. Des Weiteren besitzt die Steuerhülse 5 eine zweite radial angeordnete Öffnung 54, die mit der zweiten Zuleitung 24 in fluidischer Verbindung steht. Insbesondere sind die O-Ringdichtungen 50 zwischen den diversen Zuleitungen 23,24 bzw. Öffnungen 53,54 angeordnet. Dabei befinden sich die O-Ringdichtungen 50 auf dem Umfang der Steuerhülse 5.

Die Steuerhülse 5 ist innen hohl und umschließt so einen Ventilsteuerraum 51. Dieser Ventilsteuerraum 51 besitzt mehrere Teilräume, zum Beispiel den Mischraum 52, der sich insbesondere zwischen den beiden Öffnungen 53,54 befindet.

Im Ventilsteuerraum 51 ist der länglich ausgebildete Ventilkörper 6 beweglich gelagert. Der Ventilkörper 6 ist entlang der Längsachse 55 der Steuerhülse 5 beweglich. An dem dem Elektromagneten 3 zugewandten ersten Ende 60 des Ventilkörpers 6 befindet sich eine Anlagefläche 61 auf die das Ende des Stößels 31 wirkt und so die Bewegung des Stößels 31 (durch den Elektromagneten 3 erwirkt) auf den Ventilkörper 6 überträgt, siehe auch Figur 1c. Das Ende 60 des Ventilkörpers 6, das dem Elektromagneten 3 zugewandt ist, ist des Weiteren als Konus 63 ausgebildet und bildet im Bereich des Schaltventilteiles 10 den hierfür vorgesehenen Ventilkörperteil 62 für das Schaltventil 12.

An dem dem ersten Ende 60 gegenüberliegenden zweiten Ende 65 (siehe Figur 1b) stützt sich der Ventilkörper 6 auf einer Feder 7, genau genommen auf der Schließfeder 70 ab. Die Anordnung ist dabei so gewählt, dass bei nicht bestromten Elektromagneten 3 die Schließfeder 7,70 so stark ist, dass der Ventilkörper 6 in der Steuerhülse 5 nach links versetzt wird, derart, dass der Konus 63 am Ventilkörperteil 62 das Schaltventil 12 des Schaltventilteiles 10 schließt.

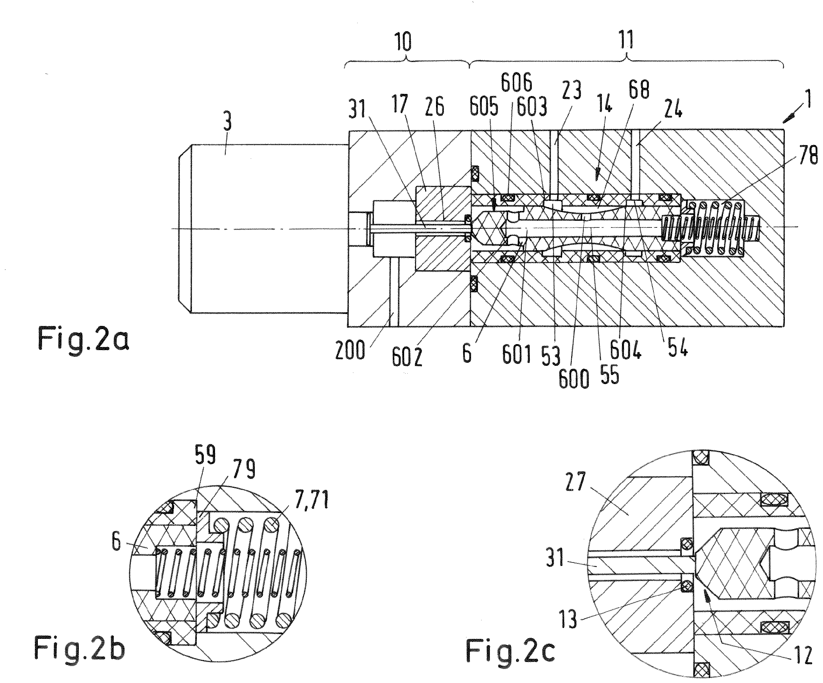

Das Mischventil 1 wird so betrieben, dass bei einer ersten (geringen) Bestromung des Elektromagneten 3 eine Magnetkraft erzeugt wird, die ausreicht, die anfängliche Kraft nur der Schließfeder 70 zu überwinden und so das Ventilkörperteil 62 am Schaltventil 12 aus dem Ventilsitz 13 herauszuheben und so dieses Schaltventil 12 zu öffnen. Bei dem Schaltventil 12 handelt es sich um ein Ventil, das eigentlich nur zwei Zustände, nämlich offen oder geschlossen, kennt. In diesem Betriebszustand bewegt sich der Ventilkörper 6 innerhalb der Steuerhülse 5 etwas nach rechts, komprimiert dabei etwas die Schließfeder 70 und schließt (siehe Figur 2b) damit den Federspalt 69, der sich zwischen der abschließenden Stirnfläche 66 am zweiten Ende 65 des Ventilkörpers 6 und einem Anlagestück 79 ergibt (siehe Figur 1b). Um die Kräfte zum Öffnen des Schaltventils 12 gering zu halten, besitzt die Schließfeder 70 nur eine geringe Steifigkeit bzw. Federkonstante.

Die Schließfeder 70 stützt sich einerseits im Endbereich des zweiten Endes 65 des Ventilkörpers 6 und andererseits im Ventilgehäuse 2 ab. Für die Abstützung der Schließfeder 70 ist im Ventilkörper 6 eine axiale (parallel zur Längsachse 55) Vertiefung 68 am Ende 65 vorgesehen. Diese Vertiefung 68 endet zumindest mit einem Kragen 67, an dem die Schließfeder 70 in axialer Richtung anliegt.

Die Abstützung der Schließfeder 70 im Ventilgehäuse 2 erfolgt in einem Aufnahmeraum 78, am Boden einer Sacklochbohrung 29. Diese Sacklochbohrung 29 ist dabei konzentrisch zur Längsachse 55.

Die Sacklochbohrung 29 ist dabei eine Stufenbohrung. D.h. in Richtung der Steuerhülse 5 schließt sich ein Bohrungsabschnitt an, der einen größeren Durchmesser hat und eine zweite Feder 7, die Regelfeder 71 aufnimmt. Die Regelfeder 71 stützt sich an dem Absatz 28 der Stufenbohrung einerseits und andererseits an dem Anlagestück 79 ab, das mit dem Ventilkörper 6 zusammenwirkt. Dabei ist das Anlagestück 79 auch axial (bezogen auf die Längsachse 55) beweglich, wobei bei Bestehen des Federspaltes 69 die Regelfeder 71 das Anlagestück 79 in Richtung der Steuerhülse 5 auf deren stirnseitigen Rand drückt und dort einen Anschlag 59 erfährt und somit seine Bewegung begrenzt ist.

Die Montage ist dabei derart, dass in das Ventilgehäuse 2 eine Längsbohrung als zweifache Stufenbohrung eingebracht wird, wobei der Abschnitt mit den beiden kleineren Durchmessern den Aufnahmeraum 78 für die Federn 7, 70, 71 bildet und der Abschnitt mit dem größten Durchmesser die Steuerhülse 5 aufnimmt. Die Steuerhülse 5 wird dabei in das Ventilgehäuse 2 eingepresst. Der Durchmesser des Anlagestückes 79 ist dabei etwas größer wie der Innendurchmesser der Steuerhülse 5, um eben auf dem ringartigen Anschlag 59 der Steuerhülse 5 aufzuliegen. Der radiale Anschlag zwischen dem Aufnahmeraum 78 mit dem größeren Durchmesser und dem Bereich, in dem die Steuerhülse 5 eingeschoben ist, positioniert die Steuerhülse 5 in dem Ventilgehäuse 2.

Die Steifigkeit der Regelfeder 71 ist größer als die der Schließfeder 70. Die Regelfeder kommt dann in Einsatz, wenn der Federspalt 69 geschlossen ist, also das Schaltventil 12 geöffnet ist. Die Regelfeder 71 ist dabei Teil des Proportionalventilteiles 11 des Mischventils 1, denn der geregelte Strom, der durch die Spule des Elektromagneten 3 fließt, erzeugt eine Kraft, die über den Stößel 31 und den Ventilkörper 6 gegen die Rückstellkraft der Regelfeder 71 wirkt. Hieraus ergibt sich der Proportionalventilteil 11 des Mischventils 1, der dazu dient, das als Schieberventil 14 realisierte Proportionalventilteil 11 zu regeln.

Die Magnetkraft zum Öffnen des Schaltventils 12 ist größer als die anfängliche Federkraft der Schließfeder 70, aber kleiner als die anfängliche Federkraft der Regelfeder 71. Die Bezeichnung "anfänglich" bezieht sich dabei darauf, dass hiermit diejenige Kraft gemeint ist, die aufgewandt werden muss, zu Beginn der jeweiligen Bewegung des Ventilkörpers 6.

Der Proportionalventilteil 11 des Mischventils 1 ist als ein Schieberventil 14 ausgeführt. Hierzu besitzt der Ventilkörper 6 einen zweiten Ventilkörperteil 64, der diese Regelaufgabe übernimmt.

Bemerkenswert dabei ist insbesondere, dass dieser zweite Ventilkörperteil 64 im Längsbereich des Ventilkörpers 6 angeordnet ist und der gleiche Ventilkörper 6 an seiner Stirnseite das für das Schaltventil 12 dienende erste Ventilkörperteil 62 aufweist.

Der Ventilkörper 6 besitzt an seiner Mantelfläche ungefähr in der Mitte eine Einschnürung 68, die ca. 20-40 % der Gesamtlänge des Ventilkörpers 6 beschreibt. Diese Einschnürung 68 erstreckt sich in Umfangsrichtung über einen Teil, bevorzugt über den gesamten Umfang des Ventilkörpers 6. Zentral in dem Bereich dieser Einschnürung 68 befindet sich eine radiale (bezogen auf die Längsachse 55) Bohrung 600. Diese radiale Bohrung 600 mündet in eine axial (bezogen auf die Längsachse 55) verlaufende Sacklochbohrung 601, die an dem dem Aufnahmeraum 78 zugewandten Ende 65 des Ventilkörpers 6 offen und in Richtung des Elektromagneten 3 geschlossen ist.

Im Bereich des dem Elektromagneten 3 zugewandten Ende 60 des Ventilkörpers 6 besitzt dieser wiederum radiale (bezogen auf die Längsachse 55) Bohrungen 602. Auch diese Bohrungen 602 münden im Inneren in die Sacklochbohrung 601.

Der Ventilkörper 6 besitzt zwei Steuerkanten 603 und 604, die in geeigneter Weise mit den Öffnungen 53, 54 der Steuerhülse 5 zusammenwirken. Die Einschnürung 68 befindet sich zwischen den beiden Steuerkanten 603 und 604. Dabei befinden sich die Steuerkanten 603 und 604 in Bereichen des Ventilkörpers 6 mit großem Durchmesser, derart, dass der Ventilkörpers 6 hier auch eine Führung innerhalb der Steuerhülse 5 erfährt.

Dabei bilden die Steuerkanten 603 und 604 auch eine Abdichtung innerhalb des Ventilsteuerraumes 51 in axialer Richtung (bezogen auf die Längsachse 55).

Im Endabschnitt 605 des Ventilkörpers 6 besitzt dieser einen geringeren Durchmesser, derart, dass sich hier ein Ringspalt 606 ausbildet, der mit den radialen Bohrungen 602 in fluidischer Verbindung steht. Somit steht der Ringspalt 606 über die radiale Bohrung 602, die längs verlaufende Sacklochbohrung 601 und der radialen Bohrung 600 mit der Einschnürung 68 in fluidischer Verbindung. Der Ringspalt 606 mündet in den Bereich des Schaltventils 12, das gebildet wird von dem Ventilsitz 13, das durch das konische Ende 60 des Ventilkörperteils 62 gesteuert ist.

In dem in Figur 1a gezeigten Schaltzustand des Mischventils 1 ist das Schaltventil 12 geschlossen, und auch der Ventilkörper 6 in der Steuerhülse 5 des Schiebeventils 14 ist so positioniert, dass die Steuerkante 604 den zweiten Zulauf 24 ebenfalls verschließt.

Somit steht nur die über die erste Zuleitung 23 angeförderte Flüssigkeit über die Öffnung 53 der Steuerhülse 5, dem Mischraum 52, der radialen Bohrung 600, der axialen Sacklochbohrung 601, der radialen Bohrung 602 und dem Ringspalt 605 an dem Schaltventil 12 des Schaltventilteiles 10 des Mischventils 1 an. Es liegt somit die über die Zuleitung 23 an geförderte Flüssigkeit (zum Beispiel kaltes Wasser) an dem Schaltventil 12 an.

Wie bereits beschrieben, wird der Ventilkörper 6 durch den Stößel 31 gegen die Kraft der Federn 7 bewegt. Dabei durchdringt der Stößel 31 in einer Durchdringungsbohrung einen Ventilblock 27, der zwischen dem Elektromagneten 3 und der Steuerhülse 5 angeordnet ist. Dieser Ventilblock 27 nimmt den Ventilsitz 13 des Schaltventils 12 auf, siehe zum Beispiel auch Figur 2c. Diese Durchdringungsbohrung ist auch gleichzeitig eine Medienleitung 26, die den Bereich (in Fließrichtung des Mediums) nach dem Schaltventil 12 mit der Ableitung 200 verbindet.

Wird nun das Mischventil 1 geöffnet, also das Mischventil 1 von dem Zustand nach Figur 1a in den Zustand nach Figur 2a überführt, dann strömt sofort das von der ersten Zuleitung 23 geförderte und vor dem Schaltventil 12 befindliche Medium in die Ableitung 200.

In dem in Figur 2a gezeigten Zustand findet auch keine Regelung bzw. Mischung der Medien, die über die Zuleitungen 23, 24 angeboten wird, statt. Die Steuerkante 604 verschließt immer noch die Zuleitung 24, das dem Elektromagneten 3 abgewandte Ende 65 des Ventilkörpers 6 liegt gerade an dem Anlagestück 79 an (der Federspalt 69 ist geschlossen) und die Regelfeder 71, die Teil des Proportionalventilteiles 11 ist, ist gerade noch nicht wirksam.

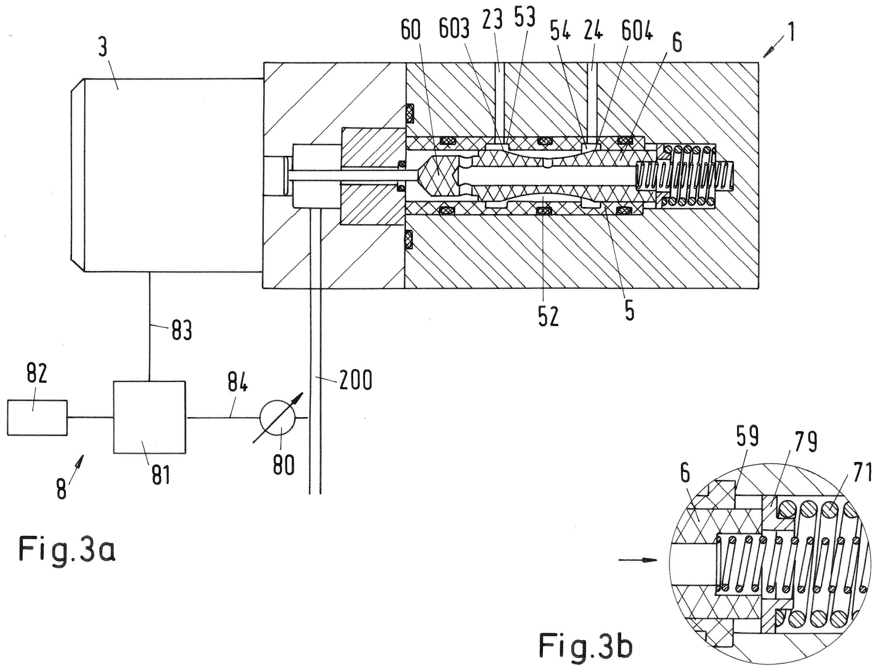

Wird nun der durch die Spule des Elektromagneten 3 fließende elektrische Strom erhöht, erhöht sich die Kraft die über den Stößel 31 auf den Ventilkörper 6 wirkt und der Ventilkörper 6 wird jetzt auch gegen die Kraft der Regelfeder 71 bewegt, wodurch der Regelprozess, also der Proportionalbereich des Mischventils 1 beginnt. Diese Stellung ist in Figur 3a und auch Figur 3b gezeigt. Es ist gut zu erkennen, dass das Anlagestück 79 von dem Anschlag 59 abgehoben, also axial nach rechts versetzt ist, wodurch zu der Rückstellkraft der Schließfeder 70 nun auch die Rückstellkraft der Regelfeder 71 (die aufgrund der höheren Steifigkeit auch größer ist) wirkt.

In Figur 3a ist gut zu erkennen, dass der Ventilkörper 6 in der Steuerhülse 5 so positioniert ist, dass die Steuerkante 603 die Öffnung 53 zumindest teilweise öffnet, wodurch eine fluidische Verbindung zwischen dem Mischraum 52 und der Zuleitung 23 hergestellt ist. Gleichzeitig ist mit dieser Position des Ventilkörpers 6 in der Steuerhülse 5 auch die Steuerkante 604 so positioniert, dass die Öffnung 54 ebenfalls zumindest teilweise geöffnet ist und dadurch ebenfalls eine fluidische Verbindung zwischen dem Mischraum 52 und der Zuleitung 24 besteht. Die Medien (die zumindest unterschiedliche Eigenschaften, wie zum Beispiel heiß und kalt, oder unterschiedlicher Art sein können), die über die Zuleitungen 23, 24 angeboten werden, können sich so in dem Mischraum 52 einander durchmischen und dann an dem geöffneten Schaltventil 12 über den bereits beschriebenen Weg zur Ableitung 200 abfließen.

In Figur 3a ist noch ein Regelkreis 8 gezeigt. In der Ableitung 200 ist ein Sensor 80 vorgesehen, der eine Eigenschaft des gemischten Mediums, zum Beispiel die Temperatur, bestimmt. Diese Sensorinformation wird als Ist-Wert über eine Datenleitung 84 an die Steuerung 81 weitergegeben, wo der gemessene Ist-Wert (zum Beispiel Temperatur) mit dem an der Regelung 82 eingestellten Soll-Wert verglichen wird und dann in geeigneter Weise über die Kennlinien, die hierzu in der Steuerung 81 hinterlegt sind, über die Steuerleitung 83 der Elektromagnet 3 nachgeregelt wird, um das gewünschte Ergebnis an der Ableitung 200 zu erzeugen.

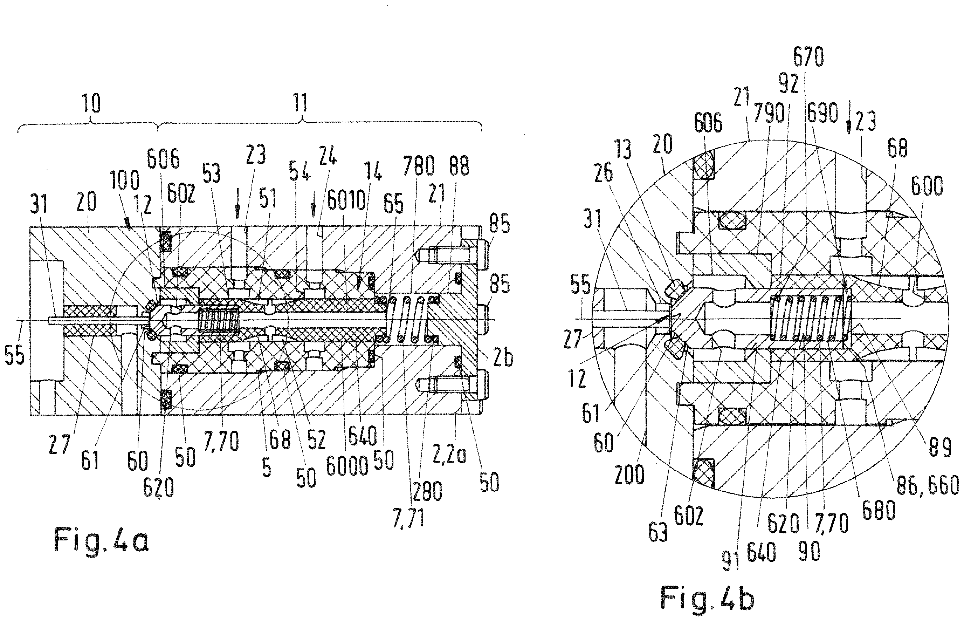

Eine nicht erfindungsgemäße Ausführungsform ist in den Figuren 4a und 4b gezeigt und nachfolgend beschrieben.

Der Aufbau des erfindungsgemäßen Mischventils 100 gemäß einer Ausführungsform wird insbesondere mithilfe von Figur 4a beschrieben, wobei, um Wiederholungen zu vermeiden, insbesondere auf die Unterschiede zu der Ausführungsform gemäß den Figuren 1a bis 3b eingegangen werden soll, die das Mischventil 1 betreffen.

Das in Figur 4a gezeigte Mischventil 100 umfasst ein Ventilgehäuse 2 und einen nicht dargestellten Elektromagneten 3, welcher jedoch wie in den vorherigen Figuren gezeigt linksseitig am Gehäuse 2 angeordnet ist.

Das hier gezeigte Mischventil 100 besitzt ein Ventilgehäuse 2. Das Ventilgehäuse 2 ist nicht wie die Ausführungsform der vorangehenden Figuren 1a bis 3b zweiteilig, sondern dreiteilig ausgebildet, was die Montage der einzelnen Elemente innerhalb des Ventilgehäuses 2 erleichtert. Das Ventilgehäuse 2 umfasst also zusätzlich zu den Gehäuseteilen 21 und 22 (Gehäusekörper 2a) einen Deckel 2b, welcher auf den Gehäusekörper 2a mittel Schrauben 85 aufgeschraubt ist und diesen verschließt. Das Mischventil 100 besitzt ein Schaltventilteil 10 und ein Proportionalventilteil 11. Vorzugsweise besitzt daher auch das Ventilgehäuse 2 bzw. der Gehäusekörper 2a ein erstes Gehäuseteil 20, welches überwiegend das Schaltventilteil 10 und ein zweites Gehäuseteil 21, welches überwiegend den Proportionalventilteil 11 des Mischventils 100 aufnimmt.

Das Ventilgehäuse 2, besitzt wie oben beschrieben eine erste Zuleitung 23 und eine zweite Zuleitung 24, jedoch ist von den drei erwähnten O-Ringdichtungen 50 eine nicht auf dem Umfang der Steuerhülse 5 angeordnet, sondern auf deren dem Deckel 2b zugewandten Stirnseite.

Der Ventilkörper 6000 weist im Gegensatz zum Ventilkörper 6 der ersten Ausführungsform einen mehrteiligen Aufbau auf, umfassend zwei separate Ventilkörperteile 620 und 640. Der Ventilkörperteil 620 ist dem Schaltventilteil 10 zugewandt und/oder zugeordnet und der Ventilkörperteil 640 ist dem Proportionalventilteil 11 zugewandt und/oder zugeordnet. Sie können daher auch als Schaltventilkörperteil 620 und Proportionalventilkörperteil 640 bezeichnet werden. An dem dem Elektromagneten 3 zugewandten ersten Ende 60 des Ventilkörpers 6000 befindet sich eine Anlagefläche 61 auf die das Ende des Stößels 31 wirkt und so die Bewegung des Stößels 31 (durch den Elektromagneten 3 angestoßen) auf den das Ventilkörperteil 620 des Ventilkörpers 6000 überträgt, siehe auch Figur 4b. Das Ende 60 des Ventilkörperteils 620, das dem Elektromagneten 3 zugewandt ist, ist des Weiteren als Konus 63 ausgebildet und bildet im Bereich des Schaltventilteiles 10 den hierfür vorgesehenen Ventilkörperteil für das Schaltventil 12.

Im Bereich eines dem ersten Ende 60 gegenüberliegenden dritten Endes 86 ist ein Kragen 670 angeordnet, an welchem sich der Ventilkörperteil 620 des Ventilkörpers 6000 auf einer Feder 7 abstützt, genau genommen auf der Schließfeder 70. Die Anordnung ist dabei so gewählt, dass bei nicht bestromten Elektromagneten 3 die Schließfeder 70 so stark ist, dass der Ventilkörperteil 620 in der Steuerhülse 5 nach links versetzt wird, derart, dass der Konus 63 am Ventilkörperteil 620 das Schaltventil 12 des Schaltventilteiles 10 schließt. Die Schließfeder 70 stützt sich anderenends am vierten Ende 87 des Ventilkörperteils 640 ab. Mit anderen Worten ist die Schließfeder 70 sich beidseits abstützend zwischen den beiden Ventilkörperteilen 620 und 640 angeordnet. Das eine Ventilkörperteil 640 weist eine Führungsausnehmung 90 für das andere Ventilkörperteil 620 zur Führung desselben in Richtung der Längsachse 55 auf.

Das Mischventil 100 wird so betrieben, dass bei einer ersten (geringen) Bestromung des Elektromagneten 3 eine Magnetkraft erzeugt wird, die ausreicht, die anfängliche Kraft nur der Schließfeder 70 zu überwinden und so das Ventilkörperteil 620 am Schaltventil 12 aus dem Ventilsitz 13 herauszuheben und so dieses Schaltventil 12 zu öffnen. Im offenen Betriebszustand bewegt sich das Ventilkörperteil 620 innerhalb der Steuerhülse 5 etwas nach rechts, komprimiert dabei etwas die Schließfeder 70 und schließt (siehe Figur 4b) damit den Federspalt 690, der sich zwischen der abschließenden Stirnfläche 660 am dritten Ende 86 des Ventilkörperteils 620 und einer Stirnfläche 89 des Ventilkörperteils 640 ergibt (siehe Figur 4b). Um die Kräfte zum Öffnen des Schaltventils 12 gering zu halten, besitzt die Schließfeder 70 nur eine geringe Steifigkeit bzw. Federkonstante.

Für die Abstützung der Schließfeder 70 ist im Ventilkörperteil 620 eine axiale (parallel zur Längsachse 55) Vertiefung 680 vorgesehen. Diese Vertiefung 680 endet zumindest mit dem Kragen 670, an dem die Schließfeder 70 in axialer Richtung anliegt.

Im Gehäuseteil 21 ist ein Aufnahmeraum 780 ausgebildet, der dabei konzentrisch zur Längsachse 55 ausgeführt ist. In den Aufnahmeraum 780 ragt ein Stufenabschnitt 88 des Deckels 2b mit einem Absatz 280. Der Aufnahmeraum 780 nimmt die Regelfeder 71 auf. Die Regelfeder 71 stützt sich an dem Absatz 280 des Stufenabschnitts 88 einerseits und andererseits an dem Ventilkörperteil 640 direkt ab, das mit dem Ventilkörperteil 620 zusammenwirkt.

Die Steifigkeit der Regelfeder 71 ist größer als die der Schließfeder 70. Die Regelfeder 71 kommt dann in Einsatz, wenn der Federspalt 690 geschlossen ist, also das Schaltventil 12 geöffnet ist. Die Regelfeder 71 ist dabei Teil des Proportionalventilteiles 11 des Mischventils 100, denn der geregelte Strom, der durch die Spule des Elektromagneten 3 fließt, erzeugt eine Kraft, die über den Stößel 31 und das Ventilkörperteil 620 gegen die Rückstellkraft der Regelfeder 71 wirkt. Um nun das Proportionalventilteil 11 des Mischventils 100 zu aktivieren, das dazu dient, das als Schieberventil 14 realisierte Proportionalventilteil 11 zu regeln, muss nun eine weiter erhöhte Kraft aufgebracht werden, so dass auch die steifere Regelfeder 71 komprimiert wird.

Die Magnetkraft zum Öffnen des Schaltventils 12 ist größer als die anfängliche Federkraft der Schließfeder 70, aber kleiner als die anfängliche Federkraft der Regelfeder 71.

Der Proportionalventilteil 11 des Mischventils 100 ist als ein Schieberventil 14 ausgeführt. Hierzu besitzt der Ventilkörper 6000 den zweiten Ventilkörperteil 640, der diese Regelaufgabe übernimmt.

Bemerkenswert dabei ist insbesondere, dass dieser zweite Ventilkörperteil 640 im Längsbereich des Ventilkörpers 6000 angeordnet ist und der zweiteilige Ventilkörper 6000 an seiner Stirnseite das für das Schaltventil 12 dienende erste Ventilkörperteil 620 als separates Element aufweist.

Das Ventilkörperteil 640 besitzt an seiner Mantelfläche ungefähr in der Mitte eine Einschnürung 68, die ca. 25-50 % der Gesamtlänge des Ventilkörperteils 640 beschreibt. Diese Einschnürung 68 erstreckt sich in Umfangsrichtung über einen Teil, bevorzugt über den gesamten Umfang des Ventilkörperteils 640. Zentral in dem Bereich dieser Einschnürung 68 befindet sich eine radiale (bezogen auf die Längsachse 55) Bohrung 600. Diese radiale Bohrung 600 mündet in eine axial (bezogen auf die Längsachse 55) verlaufende Bohrung 6010, die in Richtung der Längsachse 55 beidseits offen ist. Um ein Austreten von Fluid aus dem Ventilgehäuse 2 zu verhindern, ist der Deckel 2b mittels einer O-Ringdichtung 50 gegenüber dem Ventilgehäuse 2 abgedichtet.

Im Bereich des dem Elektromagneten 3 zugewandten Ende 60 des Ventilkörperteils 620 besitzt dieses wiederum radiale (bezogen auf die Längsachse 55) Bohrungen 602. Diese Bohrungen 602 münden im Inneren in eine Sacklochbohrung des Ventilkörperteils 620.

Im Endabschnitt 605 des Ventilkörpers 6000 besitzt der Ventilkörperteil 620 einen geringeren Durchmesser als der Ventilkörperteil 640, derart, dass sich hier ein Ringspalt 606 mit einem monolithischen Anlagestück 790 ausbildet, der mit den radialen Bohrungen 602 in fluidischer Verbindung steht. Somit steht der Ringspalt 606 über die radiale Bohrung 602, die längs verlaufende Sacklochbohrung im Ventilkörperteil 620, die Bohrung 6010 und der radialen Bohrung 600 mit der Einschnürung 68 in fluidischer Verbindung. Der Ringspalt 606 mündet in den Bereich des Schaltventils 12, das gebildet wird von dem Ventilsitz 13, das durch den mit dem Konus 63 versehenen Ventilkörperteil 620 gesteuert ist.

In dem in Figur 4a gezeigten Schaltzustand des Mischventils 1 ist das Schaltventil 12 geschlossen, und auch das Ventilkörperteil 640 in der Steuerhülse 5 des Schiebeventils 14 ist so positioniert, dass die Steuerkante 604 den zweiten Zulauf 24 ebenfalls verschließt. Somit steht nur das über die erste Zuleitung 23 angeförderte Fluid über die in Fig. 4a ringförmig ausgebildete Öffnung 53 der Steuerhülse 5, dem Mischraum 52, der radialen Bohrung 600, der axialen Bohrung 6010, der längs verlaufenden Sacklochbohrung im Ventilkörperteil 620, der radialen Bohrung 602 und dem Ringspalt 605 an dem Schaltventil 12 des Schaltventilteiles 10 des Mischventils 100 an. Es liegt somit die über die Zuleitung 23 angeförderte Flüssigkeit (zum Beispiel kaltes Wasser) an dem Schaltventil 12 an.

Wie bereits beschrieben, wird der Ventilkörperteil 620 durch den Stößel 31 gegen die Kraft der Schließfeder 70 bewegt. Dabei durchdringt der Stößel 31 in einer Durchdringungsbohrung den Ventilblock 27, der zwischen dem Elektromagneten 3 und dem Anlagestück 790 angeordnet ist. Das Gehäuseteil 20 nimmt den Ventilsitz 13 des Schaltventils 12 auf, siehe zum Beispiel auch Figur 4b. Die Durchdringungsbohrung ist auch gleichzeitig eine Medienleitung 26, die den Bereich (in Fließrichtung des Mediums) nach dem Schaltventil 12 mit der Ableitung 200 verbindet.

Das monolithische Anlagestück 790 umfasst eine Führungsfläche 91 für das eine Ventilkörperteil 620 und eine Anschlagsfläche 92 für das andere Ventilkörperteil 640.

Wird nun das Mischventil 100 geöffnet, dann strömt sofort das von der ersten Zuleitung 23 geförderte und vor dem Schaltventil 12 befindliche Medium in die Ableitung 200.

Analog zu Figur 2a findet keine Regelung bzw. Mischung der Medien, die über die Zuleitungen 23, 24 angeboten wird, statt für den Fall, dass die Steuerkante 604 noch immer die Zuleitung 24 verschließt, obgleich das Schaltventil 12 bereits geöffnet ist. Das dem Elektromagneten 3 abgewandte Ende 86 des Ventilkörperteils 620 liegt gerade an der Stirnfläche 89 des Ventilkörperteils 640 an (der Federspalt 690 ist geschlossen) und die Schließfeder 70 ist konstruktiv weitestmöglich komprimiert und die Regelfeder 71, die Teil des Proportionalventilteiles 11 ist, ist gerade noch nicht wirksam.

Wird nun der durch die Spule des Elektromagneten 3 geführte Strom erhöht, erhöht sich die Kraft die über den Stößel 31 auf den Ventilkörperteil 620 wirkt und das Ventilkörperteil 640 wird jetzt auch gegen die Kraft der Regelfeder 71 bewegt, wodurch der Regelprozess, also der Proportionalbereich des Mischventils 100 beginnt.

Bei weiterer Bestromung des Elektromagneten 3 ist klar, dass der Ventilkörperteil 640 in der Steuerhülse 5 so positioniert ist, dass die Steuerkante 603 die Öffnung 53 zumindest teilweise öffnet, wodurch eine fluidische Verbindung zwischen dem Mischraum 52 und der Zuleitung 23 hergestellt ist. Gleichzeitig ist mit dieser Position des Ventilkörperteils 640 in der Steuerhülse 5 auch die Steuerkante 604 so positioniert, dass die in Fig. 4a ringförmig ausgebildete Öffnung 54 ebenfalls zumindest teilweise geöffnet ist und dadurch ebenfalls eine fluidische Verbindung zwischen dem Mischraum 52 und der Zuleitung 24 besteht. Die Medien (die zumindest unterschiedliche Eigenschaften, wie zum Beispiel heiß und kalt, oder unterschiedlicher Art sein können), die über die Zuleitungen 23, 24 angeboten werden, können sich so in dem Mischraum 52 einander durchmischen und dann an dem geöffneten Schaltventil 12 über den bereits beschriebenen Weg zur Ableitung 200 abfließen.

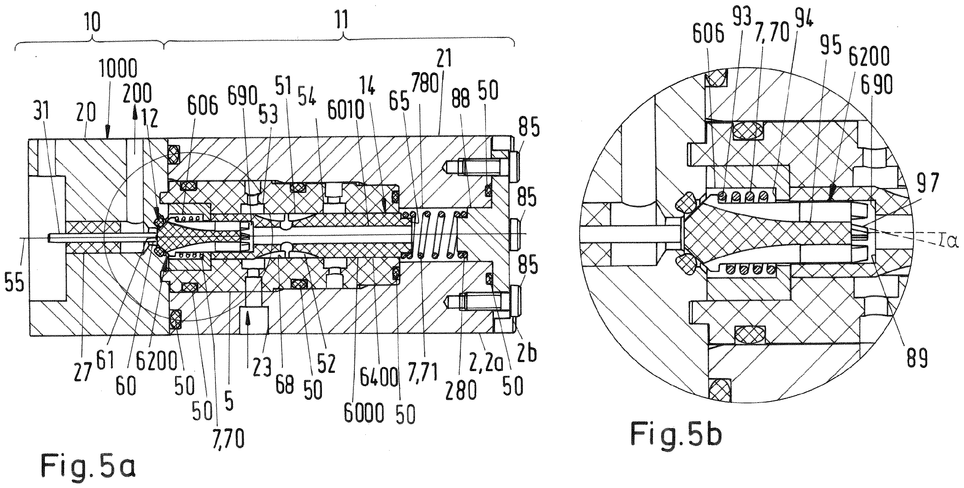

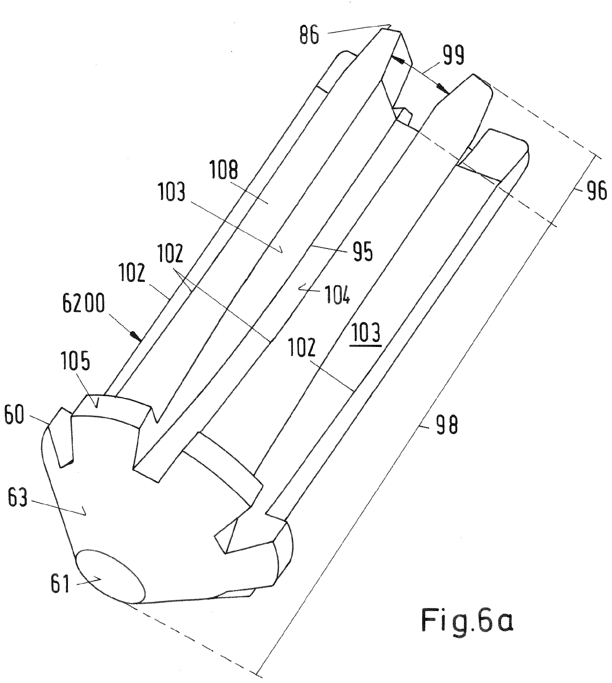

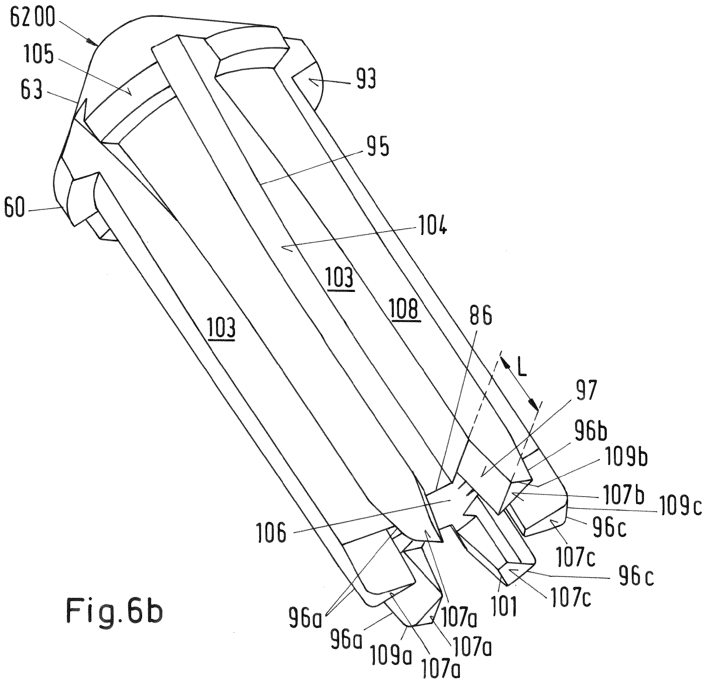

Eine Ausführungsform der Erfindung ist in den Figuren 5a und 5b gezeigt und nachfolgend beschrieben. Die Figuren 6a und 6b zeigen zwar das in den Figuren 5a und 5b abgebildete Ventilkörperteil in Alleinstellung, dessen Einsatz ist jedoch nicht auf die Ausführungsform beschränkt.

Der Aufbau des erfindungsgemäßen Mischventils 1000 gemäß der Ausführungsform wird insbesondere mithilfe von Figur 5a beschrieben, wobei, um Wiederholungen zu vermeiden, insbesondere auf die Unterschiede zu der Ausführungsform gemäß den Figuren 4a und 4b eingegangen werden soll.

Das Mischventil 1000 umfasst ein abgeändertes Ventilkörperteil 6200 und eine verändertes Federarrangement auf. Zwischen dem Ventilgehäuse 2 und dem Ventilkörperteil 6200 ist eine der Federn 7 als Schließfeder 70 angeordnet. Eine weitere der Federn 7 ist als Regelfeder 71 zwischen dem dem Proportionalventilteil 11 zugewandten Ventilkörperteil 6400 und dem Ventilgehäuse 2 angeordnet. Die Schließfeder 70 stützt sich somit nicht mehr einseitig am anderen Ventilkörperteil 6400 sondern vielmehr am Ventilgehäuse 2 bzw. dessen Anlagestück 790 ab. Hierfür weist das Anlagestück 790 die Abstützfläche 94 für die Schließfeder 70 auf. Die Abstützfläche 94 liegt zu dem anderen Ventilkörperteil 6400 abgewandt. Anderenends stützt sich die Schließfeder 70 an der Abstützfläche 93 am Ventilkörperteil 6200 ab, welche dem anderen Ventilkörperteil 6400 gegenüber liegt.

Im zweiten Gehäuseteil 21 sind die Zuleitungen 23, 24 nicht mehr parallel ausgebildet. Es ist lediglich die Zuleitung 23 gezeigt, die Zuleitung 24 ist vorhanden, jedoch aufgrund der Perspektive nicht abgebildet.

Mit Blick auf Figur 5a ist erkennbar, dass die Schließfeder 70 im Ringspalt 606 angeordnet ist, der vom Anlagestück 790 definiert ist.

Die Figuren 6a und 6b zeigen das Ventilkörperteil 6200 in Alleinstellung. Das Ventilkörperteil 6200 weist einen Grundkörper 98 mit einem Ende 60 und ein diesem Ende 60 gegenüberliegenden anderen Ende 86 auf. Am Ende 60 ist der kegelartige Konus 63 ausgebildet, welcher zur Anlage an den Ventilsitz 13 kommen kann. Der Konus 63 läuft auf die Anlagefläche 61 zu, auf die das Ende des Stößels 31 wirken kann. Gut erkennbar ist in Figur 6b die Abstützfläche 93 am Ventilkörperteil 6200 für die Schließfeder 70.

Entlang seiner Längsmittelachse ist das Ventilkörperteil 6200 segmentiert ausgebildet. Jeder gebildete Segmentkamm 102 spingt gegenüber einer vom Konus 63 definierte Kopfumfangsfläche 105 zurück. Der Rücksprung bildet die Abstützfläche 93 aus. Zwischen zwei benachbarten Segmentkämmen 102 ist jeweils ein Fluidkanal 95 ausgebildet. Benachbarte Segmentkämmen 102 begrenzen mit ihren einander gegenüberliegenden Seitenwandflächen 103 den Fluidkanal 95 ebenso, wie eine Außenfläche 104 des Grundkörpers 98, die im Grund des Fluidkanals 95 ausgebildet ist. Hiervon zu unterscheiden ist die Außenfläche 108 jedes Segmentkamms 102. Jeder Fluidkanal 95 verläuft abschnittsweise parallel zur Längsamittelachse 55 und steigt mit zunehmender Nähe zur Anlagefläche 61 gegenüber der Längsamittelachse 55 an, wie insb. Fig 5b zeigt.

Der Grundkörper 98 ended an dem Ende 86 mit einer Endfläche 106. Aus dieser Endfläche 106 bzw. gegenüber dieser in Richtung der Längsamittelachse 55 und entgegen der Strömungsrichtung des Fluids hervorspringend sind am Grundkörper 98 sechs Reinigungsfortsätze 96a, 96b und 96c angeordnet, welche Gemeinsameiten aufweisen, sich jedoch in ihrer konkreten Ausgestaltung auch unterscheiden.

Den Reinigungsfortsätzen 96a, 96b und 96c ist gemein, dass zwischen benachbarten Reinigungsfortsätzen 96 jeweils ein Freiraum 99 ausgebildet ist - die einzelnen säulenartigen Reinigungsfortsätze 96 sind also untereinander nicht verbunden sondern vermittels der Freiräume 99 gegeneinander abgegrenzt. Jeder Reinigungsfortsatz 96 ist als Verlängerung eines Segmentkammes 102 ausgebildet, so dass sich jeweils ein monolithischer Reinigungsfortsatz-Segmentkamm ausbildet. Die Länge L der Reinigungsfortsätze 96a, 96b, 96c ist so bemessen, dass eine am Reinigungsfortsatz 96 endseitig angeordnete Reinigungsfläche 107a, 107b, 107c mit einer ihr gegenüberliegenden Stirnfläche 89 des Ventilkörperteils 6400 in Kontakt kommen kann beim Schließen des Federspalts 690. Gerade die Stirnfläche 89 neigt zur Ausbildung von Ablageungen, die eine Venetilfunktionalität beeinträchtigen. Jeder Reinigungsfortsatz 96 kann im Querschnitt eine im Wesentlichen kreissektorähnliche Form haben.

Die Reinigungsfortsätze 96a, 96b und 96c unterscheiden sich im Wesentlichen durch folgende Merkmale. Zueinander ungleich ausgebildete Reinigungsfortsätze 96 führen zu einer ungleichförmigen Krafteinwirkung auf die Ablagerung, was die Reinigungswirkung erheblich vergrößert.

Die Ausbildung eines monolithischen Reinigungsfortsatz-Segmentkamms je Segmentkamm 102/Reinigungsfortsatz 96 kann dazu führen, dass die Außenfläche 108 des Segmentkamms 102 ohne Unterbrechung auch die Außenfläche 108 des Reinigungsfortsatzes 96 werden kann. Beim Reinigungsfortsatz 96a, drei mal vorhanden, geht die entsprechende Außenfläche 108 in einen als Radius ausgebildeten Übergang 109a über und dann in die Reinigungsfläche 107a. Beim Reinigungsfortsatz 96b, einmal vorhanden, endet die entsprechende Außenfläche 108 in einem als Kante ausgebildeten Übergang 109b. An diese Kante schließt sich ortogonal zur Außenfläche 108 die Reinigungsfläche 107b an. Beim Reinigungsfortsatz 96c, zwei mal vorhanden, geht die entsprechende Außenfläche 108 in einen als Radius ausgebildeten Übergang 109c über und dann in die Reinigungsfläche 107c, wobei dieser Radius größer ausgebildet ist, als der Radius des Übergangs 109a. Die Reinigungsfortsätze 96 laufen ab der Endfläche 106 jeweils spitz zu, was bei den Reinigungsfortsätzen 96a und 96b zur Ausbildung einer dreieckigen Reinigungsfläche 107a, 107b und bei den beiden Reinigungsfortsätzen 96c zu einer trapezförmigen Reinigungsfläche 107c führt.

Über die Länge L von Reinigungsfortsätzen 96 kann ein Rotationsmittel in Form einer Anströmfläche 97 ausgebildet sein. Jede Anströmfläche 97 ist abgewinkelt gegenüber einer benachbarten Seitenwandfläche 103. Jede Anströmfläche 97 schließt mit der Strömungsrichtung des Fluids oder der Längsmittelachse 55 einen spitzen Winkel (α) von 15° ein. Das vorbeiströmende Fluid drückt gegen die Anströmfläche 97 und ein Teil der Bewegungsenergie des Fluidstroms wird genutzt, um eine Rotation des Ventilkörperteils 6200 um seine eigene Längsachse verursachen zu können. An der der Anströmfläche 97 gegenüberliegenden Seite jedes Reinigungsfortsatzes 96 ist eine Reinigungskante 101 ausgebildet, welche im Wesentlichen radial verläuft. Jede Reinigungskante 101 liegt zwichen der Reinigungsfläche 107 und einer Seitenwandfläche des jeweiligen Reinigungsfortsatzes 96.

**Bezugszeichenliste**

| | | | |
|---|---|---|---|
| 1 | Mischventil | 53 | Öffnung |
| 2 | Ventilgehäuse | 54 | Öffnung |
| 2a | Gehäusekörper | 55 | Längsachse |
| 2b | Deckel | 59 | Anschlag |
| 3 | Elektromagnet | 60 | erstes Ende |
| 5 | Steuerhülse | 61 | Anlagefläche |
| 6 | Ventilkörper | 62 | Ventilkörperteil |
| 7 | Feder | 63 | Konus |
| 8 | Regelkreis | 64 | Ventilkörperteil |
| 10 | Schaltventilteil | 65 | zweites Ende |
| 11 | Proportionalventilteil | 66 | Stirnfläche |
| 12 | Schaltventil | 67 | Kragen |
| 13 | Ventilsitz | 68 | Einschnürung |
| 14 | Schieberventil | 69 | Federspalt |
| 20 | erstes Gehäuseteil | 70 | Schließfeder |
| 21 | zweites Gehäuseteil | 71 | Regelfeder |
| 23 | Zuleitung | 78 | Aufnahmeraum |
| 24 | Zuleitung | 79 | Anlagestück |
| 26 | Medienleitung | 80 | Sensor |
| 27 | Ventilblock | 81 | Steuerung |
| 28 | Absatz | 82 | Regelung |
| 29 | Sacklochbohrung | 83 | Steuerleitung |
| 30 | Ende | 84 | Datenleitung |
| 31 | Stößel | 85 | Schraube |
| 32 | Ankerstange | 86 | drittes Ende |
| 50 | O-Ringdichtung | 88 | Stufenabschnitt |
| 51 | Ventilsteuerraum | 89 | Stirnfläche |
| 52 | Mischraum | 90 | Führungsausnehmung |
| 91 | Führungsfläche | 109c | Übergang |
| 92 | Anschlagsfläche | 200 | Ableitung |
| 93 | Abstützfläche | 280 | Absatz |
| 94 | Abstützfläche | 600 | radiale Bohrung |
| 95 | Fluidkanal | 601 | Sacklochbohrung |
| 96 | Reinigungsfortsätze | 602 | radiale Bohrung |
| 96a | Reinigungsfortsatz | 603 | Steuerkante |
| 96b | Reinigungsfortsatz | 604 | Steuerkante |
| 96c | Reinigungsfortsatz | 605 | Endabschnitt |
| 97 | Anströmfläche | 606 | Ringspalt |
| 98 | Grundkörper | 620 | Ventilkörperteil |
| 99 | Freiraum | 640 | Ventilkörperteil |
| 100 | Mischventil | 660 | Stirnfläche |
| 101 | Reinigungskante | 670 | Kragen |
| 102 | Segmentkamm | 680 | Vertiefung |
| 103 | Seitenwändfläche | 690 | Federspalt |
| 104 | Außenfläche | 780 | Aufnahmeraum |
| 105 | Kopfumfangsfläche | 790 | Anlagestück |
| 106 | Endfläche | 1000 | Mischventil |
| 107 | Reinigungsflächen | 6000 | Ventilkörper |
| 107a | Reinigungsfläche | 6010 | Bohrung |
| 107b | Reinigungsfläche | 6200 | Ventilkörperteil |
| 107c | Reinigungsfläche | 6400 | Ventilkörperteil |
| 108 | Außenfläche | | |
| 109a | Übergang | | |
| 109b | Übergang | | |

## Patentansprüche

1. Mischventil, umfassend ein Ventilgehäuse (2) und ein Schaltventilteil (10) und ein Proportionalventilteil (11), wobei für das Schaltventilteil (10) und das Proportionalventilteil (11) ein mehrteiliger Ventilkörper (6000) vorgesehen ist, und der Ventilkörper (6000) ein dem Schaltventilteil (10) zugewandtes Ventilkörperteil (6200) und ein dem Proportionalventilteil (11) zugewandtes Ventilkörperteil (6400) aufweist, und der Ventilkörper (6000) von einer externen Kraft gegen die Rückstellkraft zumindest einer Feder (7, 70, 71) bewegbar ist, **dadurch gekennzeichnet, dass** das dem Schaltventilteil (10) zugewandte Ventilkörperteil (6200) an seinem einen Ende (86) zumindest einen Reinigungsfortsatz (96) aufweist, welcher derart ausgebildet und/oder angeordnet ist, dass dieser mit einer ihm gegenüberliegenden Fläche des dem Proportionalventilteil (11) zugewandten Ventilkörperteils (6400) in Kontakt kommen kann.

2. Mischventil nach Anspruch 1, **dadurch gekennzeichnet, dass** das Schaltventilteil (10) ein Sitzventil ist.

3. Mischventil nach einem der vorhergehenden Ansprüche, **dadurch gekennzeichnet, dass** das Proportionalventilteil (11) ein Schieberventil ist.

4. Mischventil nach einem der vorhergehenden Ansprüche, **dadurch gekennzeichnet, dass** eine der Federn als Schließfeder (70) ausgebildet und eine der Federn als Regelfeder (71) ausgebildet ist, wobei die Schließfeder (70) eine geringere Steifigkeit aufweist als die Regelfeder (71).

5. Mischventil nach Anspruch 4, **dadurch gekennzeichnet, dass** die Federn (7, 70, 71) derart ausgebildet sind, dass eine entgegen der Federkräfte der Federn (7, 70, 71) wirkende Kraft zunächst ausschließlich die Schließfeder (70) komprimiert und erst zeitlich nachfolgend oder teilweise zeitgleich die Regelfeder (71) komprimiert.

6. Mischventil nach einem der vorhergehenden Ansprüche, **dadurch gekennzeichnet, dass** das eine Ventilkörperteil (6400) eine Führungsausnehmung (90) für das andere Ventilkörperteil (6200) zur Führung in Richtung einer Längsachse (55) aufweist.

7. Mischventil nach einem der vorhergehenden Ansprüche, **dadurch gekennzeichnet, dass** ein vorzugsweise monolithisches Anlagestück (790) eine Führungsfläche (91) für das eine Ventilkörperteil (6200) und/oder eine Anschlagsfläche (92) für das andere Ventilkörperteil (6400) aufweist.

8. Mischventil nach einem der vorhergehenden Ansprüche, **dadurch gekennzeichnet, dass** ein vorzugsweise monolithisches Anlagestück (790) zumindest abschnittsweise einen Ringspalt (606) definiert.

9. Mischventil nach einem der vorhergehenden Ansprüche, **dadurch gekennzeichnet, dass** zwischen dem dem Schaltventilteil (10) zugewandten Ventilkörperteil (6200) und dem Ventilgehäuse (2) eine der Federn (7) als Schließfeder (70) angeordnet ist und eine weitere der Federn (7) als Regelfeder (71) zwischen dem dem Proportionalventilteil (11) zugewandten Ventilkörperteil (6400) und dem Ventilgehäuse (2) angeordnet ist.

10. Mischventil nach Anspruch 9, **dadurch gekennzeichnet, dass** das Ventilkörperteil (6200) eine Abstützfläche (93) für die Schließfeder (70) aufweist, welche Abstützfläche (93) dem anderen Ventilkörperteil (6400) gegenüber liegt.

11. Mischventil nach einem der Ansprüche 7 bis 10, **dadurch gekennzeichnet, dass** das Anlagestück (790) eine Abstützfläche (94) für die Schließfeder (70) aufweist, welche Abstützfläche (94) vorzugsweise zu dem anderen Ventilkörperteil (6400) abgewandt liegt.

12. Mischventil nach einem der Ansprüche 8 bis 11, **dadurch gekennzeichnet, dass** die Schließfeder (70) im Ringspalt (606) angeordnet ist.

13. Mischventil nach einem der vorhergehenden Ansprüche, **dadurch gekennzeichnet, dass** das Ventilkörperteil (6200) umfangsseitig entlang seiner Längsmittelachse zumindest einen Fluidkanal (95) aufweist.

14. Mischventil nach einem der Ansprüche 1 bis 8, **dadurch gekennzeichnet, dass** zwischen dem dem Schaltventilteil (10) zugewandten Ventilkörperteil und dem dem Proportionalventilteil (11) zugewandten Ventilkörperteil eine der Federn (7) als Schließfeder (70) angeordnet ist und eine weitere der Federn (7) als Regelfeder (71) zwischen dem dem Proportionalventilteil (11) zugewandten Ventilkörperteil (640) und dem Ventilgehäuse (2) angeordnet ist.

15. Mischventil nach einem der vorhergehenden Ansprüche, **dadurch gekennzeichnet, dass** das dem Schaltventilteil (10) zugewandte Ventilkörperteil (6200) zumindest ein Rotationsmittel umfasst, welches ausgebildet ist, um im Zusammenwirken mit einem vorbeiströmbaren Fluid eine Rotation des Ventilkörperteils (6200) um seine eigene Längsachse verursachen zu können.

16. Mischventil nach Anspruch 15, **dadurch gekennzeichnet, dass** das Rotationsmittel eine Anströmfläche (97) ist, welche mit einer Strömungsrichtung des Fluids einen spitzen Winkel (α) im Bereich zwischen 0,1° bis 45°, vorzugsweise zwischen 10° bis 20°, noch mehr bevorzugt 15° einschließt.

17. Verwendung eines Mischventils (1000) nach einem der Ansprüche 1 bis 16 zum Mischen von Wässern unterschiedlicher Temperaturen.

## Claims

1. Mixing valve, comprising a valve housing (2) and a switchover valve part (10) and a proportional valve part (11), wherein a multiple-part valve body (6000) is provided for the switchover valve part (10) and the proportional valve part (11), and the valve body (6000) has a valve body part (6200) facing the switchover valve part (10), and a valve body part (6400) facing the proportional valve part (11), and the valve body (6000) by an external force is movable counter to the restoring force of at least one spring (7, 70, 71), **characterized in that** the valve body part (6200) facing the switchover valve part (10) on its one end (86) has at least one cleaning appendage (96) which is configured and/or disposed in such a manner that said cleaning appendage (96) can contact a face, lying opposite said cleaning appendage (96), of the valve body part (6400) facing the proportional valve part (11).

2. Mixing valve according to Claim 1, **characterized in that** the switchover valve part (10) is a seated valve.

3. Mixing valve according to one of the preceding claims, **characterized in that** the proportional valve part (11) is a gate valve.

4. Mixing valve according to one of the preceding claims, **characterized in that** one of the springs is configured as a closing spring (70), and one of the springs is configured as a regulating spring (71), wherein the closing spring (70) has a lower stiffness than the regulating spring (71).

5. Mixing valve according to Claim 4, **characterized in that** the springs (7, 70, 71) are configured in such a manner that a force acting counter to the spring forces of the springs (7, 70, 71) initially compresses exclusively the closing spring (70), and compresses the regulating spring (71) only subsequently or partly simultaneously.

6. Mixing valve according to one of the preceding claims, **characterized in that** the one valve body part (6400) has a guiding clearance (90) for the other valve body part (6200), for guiding in the direction of a longitudinal axis (55).

7. Mixing valve according to one of the preceding claims, **characterized in that** a preferably monolithic contact piece (790) has a guiding face (91) for the one valve body part (6200) and/or a stopping face (92) for the other valve body part (6400).

8. Mixing valve according to one of the preceding claims, **characterized in that** a preferably monolithic contact piece (790) at least in portions defines an annular gap (606).

9. Mixing valve according to one of the preceding claims, **characterized in that** one of the springs (7) as the closing spring (70) is disposed between the valve body part (6200) facing the switchover valve part (10) and the valve housing (2), and a further one of the springs (7) as the regulating spring (71) is disposed between the valve body part (6400) facing the proportional valve part (11) and the valve housing (2).

10. Mixing valve according to Claim 9, **characterized in that** the valve body part (6200) has a support face (93) for the closing spring (70), said support face (93) lying opposite the other valve body part (6400).

11. Mixing valve according to one of Claims 7 to 10, **characterized in that** the contact piece (790) has a support face (94) for the closing spring (70), said support face (94) preferably lying so as to face away from the other valve body part (6400).

12. Mixing valve according to one of Claims 8 to 11, **characterized in that** the closing spring (70) is disposed in the annular gap (606).

13. Mixing valve according to one of the preceding claims, **characterized in that** the valve body part (6200) on the circumference along its longitudinal central axis has at least one fluid duct (95).

14. Mixing valve according to one of Claims 1 to 8, **characterized in that** one of the springs (7) as the closing spring (70) is disposed between the valve body part facing the switchover valve part (10) and the valve body part facing the proportional valve part (11), and a further one of the springs (7) as the regulating spring (71) is disposed between the valve body part (640) facing the proportional valve part (11) and the valve housing (2) .

15. Mixing valve according to one of the preceding claims, **characterized in that** the valve body part (6200) facing the switchover valve part (10) comprises at least one rotating device which, when interacting with a fluid flow able to pass the latter, is configured to be able to cause rotation of the valve body part (6200) about its own longitudinal axis.

16. Mixing valve according to Claim 15, **characterized in that** the rotating device is an incident flow face (97) which conjointly with a flow direction of the fluid encloses an acute angle (α) in the range between 0.1° and 45°, preferably between 10° and 20°, even more preferably 15°.

17. Use of a mixing valve (1000) according to one of Claims 1 to 16 for mixing water of different temperatures.

## Revendications

1. Vanne mélangeuse, comprenant un carter de vanne (2) et une partie de vanne de commutation (10) et une partie de vanne proportionnelle (11), un corps de vanne (6000) en plusieurs parties étant prévu pour la partie de vanne de commutation (10) et la partie de vanne proportionnelle (11), et le corps de vanne (6000) présentant une partie de corps de vanne (6200) tournée vers la partie de vanne de commutation (10) et une partie de corps de vanne (6400) tournée vers la partie de vanne proportionnelle (11), et le corps de vanne (6000) étant déplaçable par une force externe à l'encontre de la force de rappel d'au moins un ressort (7, 70, 71), **caractérisée en ce que** la partie de corps de vanne (6200) tournée vers la partie de vanne de commutation (10) présente à l'une de ses extrémités (86) au moins une saillie de nettoyage (96), laquelle est réalisée et/ou disposée de telle sorte que celle-ci peut venir en contact avec une surface de la partie de corps de vanne (6400) tournée vers la partie de vanne proportionnelle (11), laquelle surface est orientée vers l'au moins une saillie de nettoyage.

2. Vanne mélangeuse selon la revendication 1, **caractérisée en ce que** la partie de vanne de commutation (10) est une vanne à siège.

3. Vanne mélangeuse selon l'une des revendications précédentes, **caractérisée en ce que** la partie de vanne proportionnelle (11) est une vanne à tiroir.

4. Vanne mélangeuse selon l'une des revendications précédentes, **caractérisée en ce que** l'un des ressorts est réalisé sous forme de ressort de fermeture (70) et l'un des ressorts est réalisé sous forme de ressort de régulation (71), le ressort de fermeture (70) présentant une rigidité inférieure à celle du ressort de régulation (71) .

5. Vanne mélangeuse selon la revendication 4, **caractérisée en ce que** les ressorts (7, 70, 71) sont réalisés de telle sorte qu'une force agissant à l'encontre des forces des ressort (7, 70, 71) comprime tout d'abord exclusivement le ressort de fermeture (70) et seulement ensuite ou partiellement simultanément comprime le ressort de régulation (71).

6. Vanne mélangeuse selon l'une des revendications précédentes, **caractérisée en ce qu'**une partie de corps de vanne (6400) présente un évidement de guidage (90) pour l'autre partie de corps de vanne (6200) pour le guidage dans la direction d'un axe longitudinal (55).

7. Vanne mélangeuse selon l'une des revendications précédentes, **caractérisée en ce qu'**une pièce d'appui (790) de préférence monolithique présente une surface de guidage (91) pour l'une des parties de corps de vanne (6200) et/ou une surface de butée (92) pour l'autre partie de corps de vanne (6400).

8. Vanne mélangeuse selon l'une des revendications précédentes, **caractérisée en ce qu'**une pièce d'appui (790) de préférence monolithique définit un interstice annulaire (606) au moins dans certaines régions.

9. Vanne mélangeuse selon l'une des revendications précédentes, **caractérisée en ce que** l'un des ressorts (7) est disposé en tant que ressort de fermeture (70) entre la partie de corps de vanne (6200) tournée vers la partie de vanne de commutation (10) et le carter de vanne (2) et un autre des ressorts (7) est disposé en tant que ressort de régulation (71) entre la partie de corps de vanne (6400) tournée vers la partie de vanne proportionnelle (11) et le carter de vanne (2).

10. Vanne mélangeuse selon la revendication 9, **caractérisée en ce que** la partie de corps de vanne (6200) présente une surface de support (93) pour le ressort de fermeture (70), laquelle surface de support (93) est tournée vers l'autre partie de corps de vanne (6400).

11. Vanne mélangeuse selon l'une des revendications 7 à 10, **caractérisée en ce que** la pièce d'appui (790) présente une surface de support (94) pour le ressort de fermeture (70), laquelle surface de support (94) est de préférence opposée à l'autre partie de corps de vanne (6400).

12. Vanne mélangeuse selon l'une des revendications 8 à 11, **caractérisée en ce que** le ressort de fermeture (70) est disposé dans l'interstice annulaire (606).

13. Vanne mélangeuse selon l'une des revendications précédentes, **caractérisée en ce que** la partie de corps de vanne (6200) présente au moins un canal de fluide (95) circonférentiellement le long de son axe central longitudinal.

14. Vanne mélangeuse selon l'une des revendications 1 à 8, **caractérisée en ce que** l'un des ressorts (7) est disposé en tant que ressort de fermeture (70) entre la partie de corps de vanne tournée vers la partie de vanne de commutation (10) et la partie de corps de vanne tournée vers la partie de vanne proportionnelle (11) et un autre des ressorts (7) est disposé en tant que ressort de régulation (71) entre la partie de corps de vanne (640) tournée vers la partie de vanne proportionnelle (11) et le carter de vanne (2).

15. Vanne mélangeuse selon l'une des revendications précédentes, **caractérisée en ce que** la partie de corps de vanne (6200) tournée vers la partie de vanne de commutation (10) comprend au moins un moyen de rotation, lequel est réalisé pour provoquer, en coopération avec un fluide s'écoulant, une rotation de la partie de corps de vanne (6200) autour de son propre axe longitudinal.

16. Vanne mélangeuse selon la revendication 15, **caractérisée en ce que** le moyen de rotation est une surface d'arrivée d'écoulement (97), laquelle forme avec une direction d'écoulement du fluide un angle aigu (α) dans la plage comprise entre 0,1° et 45°, de préférence entre 10° et 20°, plus préférablement encore de 15°.

17. Utilisation d'une vanne mélangeuse (1000) selon l'une des revendications 1 à 16 pour le mélange d'eaux de températures différentes.
